Europäisches Patentamt

European Patent Office

Office européen des brevets

(19)

(11) **EP 0 522 443 B1**

(12) **EUROPÄISCHE PATENTSCHRIFT**

(45) Veröffentlichungstag und Bekanntmachung des Hinweises auf die Patenterteilung:
**22.05.1996 Patentblatt 1996/21**

(51) Int Cl.$^6$: **C08G 77/34**

(21) Anmeldenummer: **92111187.8**

(22) Anmeldetag: **02.07.1992**

(54) **Verfahren zur Reinigung von Organopolysiloxanen**

Process for purifying organopolysiloxanes

Procédé de purification d'organopolysiloxanes

(84) Benannte Vertragsstaaten:
**DE ES FR GB**

(30) Priorität: **04.07.1991 DE 4122206**

(43) Veröffentlichungstag der Anmeldung:
**13.01.1993 Patentblatt 1993/02**

(73) Patentinhaber: **WACKER-CHEMIE GMBH**
**D-81737 München (DE)**

(72) Erfinder:
- **Schneider, Otto, Dr.**
  **W-8263 Burghausen (DE)**
- **Schuster, Johann, Dr.**
  **W-8261 Emmerting (DE)**
- **Hager, Ludwig**
  **W-8263 Burghausen (DE)**

(56) Entgegenhaltungen:
EP-A- 0 061 668    EP-A- 0 186 736
EP-A- 0 424 791    DD-A- 240 897
FR-A- 1 253 178    FR-A- 2 168 439

**Beschreibung**

Die vorliegende Erfindung betrifft ein Verfahren zur Reinigung von Organopolysiloxanen nach deren Herstellung.

Die Herstellung von Organopolysiloxanen aus kürzerkettigen Organo(poly)siloxanen ist ausführlich in W. Noll, Chemie und Technologie der Silicone, 2. Auflage 1968, Kap. 5.4, beschrieben. Herstellungsbedingt können die an sich farblosen, klaren, geruchlosen und inerten Organopolysiloxane Verunreinigungen enthalten, die Farbveränderungen, insbesondere bei Hitzelagerung, Nachtrübungen, Inhibierung von Katalysatoren, z.B bei Additionsreaktionen mit Platin, mangelnde Hitzestabilität, mangelnde elektrische Durchschlagsfestigkeit oder Geruchsbildung, insbesondere nach Belichtung, verursachen. Verunreinigungen treten nicht nur bei der Verwendung homogener Katalysatoren, wie $PNCl_2$ auf, sondern sind auch bei der Verwendung heterogener Katalysatoren, wie saure Bleicherde kaum zu vermeiden.

Diese Verunreinigungen sind bei den modernen Herstellungsverfahren nur in äußerst geringen Mengen in den Organopolysiloxanen vorhanden und konnten deshalb bisher analytisch noch nicht identifiziert werden.

Die vorstehenden, durch die Verunreinigungen verursachten Mängel können teilweise durch die Nachbehandlung mit einem Adsorptionsmittel, wie Aktivkohle, beseitigt werden. Jedoch binden die Adsorptionsmittel große Mengen des Polyorganosiloxans. Dies führt zu einem deutlichen Verlust an Ausbeute. Mit einem Inhibitor für die Additionsreaktion verunreinigte Organopolysiloxane konnten bisher nicht mehr hinreichend für die Verwendung für unter Platinkatalyse additionsvernetzende Kautschuke gereinigt werden.

In der DD-A-240 897 (H.Krönig et al., ausgegeben am 19.11.1986 für VEB Chemiewerk Nünchritz, DDR) ist die Herstellung von geruchsfreien Siliconölen durch Äquilibrierung von Organopolysiloxanen in Gegenwart eines sauren Katalysators und eines Metallzusatzes beschrieben. Durch den Metallzusatz soll der dem Siliconöl anhaftende unangenehme Geruch beseitigt werden. Jedoch fällt bei der Verwendung eines heterogenen Katalysators ein Gemisch aus Katalysator und Metallzusatz an, das kaum wiederaufarbeitbar ist und Probleme bei der Entsorgung bereiten kann. Die Menge des benötigten Metalls ist dadurch groß und der Katalysator kann, wenn überhaupt, erst nach einer aufwendigen Behandlung wiederverwendet werden. Homogene saure Katalysatoren reagieren mit dem Metallzusatz und eigenen sich nicht für dieses Verfahren.

Der Erfindung liegt die Aufgabe zugrunde, ein Verfahren zur Reinigung von Organopolysiloxanen bereitzustellen, das für alle Organopolysiloxane unabhängig von deren Herstellung geeignet ist, bei dem ein heterogener Katalysator mehrfach verwendet werden kann und keine Entsorgungsprobleme auftreten.

Die Erfindung betrifft ein Verfahren zur Reinigung von Organopolysiloxanen, bei dem die Organopolysiloxane nach deren Herstellung mit elementarem Metall, das ausgewählt wird aus Magnesium, Titan, Zirkon, Hafnium, Vanadium, Niob, Tantal, Chrom, Molybdän, Wolfram, Mangan, Eisen, Kobalt, Nickel, Kupfer, Silber, Zink, Cadmium, Zinn, Blei, Antimon und Bismut oder Silizium behandelt werden.

Im folgenden werden die vorstehenden Metalle und zusätzlich das Halbmetall Silizium vereinfacht gemeinsam als metall bezeichnet.

Die Erfindung ist für die Reinigung beliebiger Organopolysiloxane geeignet. Die Organopolysiloxane fallen vorzugsweise unter die allgemeine Formel

$$R_a SiO_{\frac{4-a}{2}}$$

in der R gleiche oder verschiedene einwertige, gegebenenfalls substituierte, über SiC-gebundene $C_1$-$C_{18}$-Kohlenwasserstoffreste und gegebenenfalls einer der Reste R in den Endgruppen zusätzlich funktionelle Reste, und a 0, 1, 2 oder 3, durchschnittlich 1,8 bis 2,2, vorzugsweise 1,9 bis 2,1, bedeutet.

Obwohl in der oben aufgeführten Formel nicht aufgeführt, kann ein Teil der Reste R durch direkt an Siliciumatome gebundene Wasserstoffatome ersetzt sein. Dies ist jedoch nicht bevorzugt.

Vorzugsweise enthalten die Reste R höchstens 12 Kohlenstoffatome je Rest. Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der alpha- und der β- Phenylethylrest.

Beispiele für substituierte Reste R sind Cyanalkylreste, wie der β-Cyanethylrest, und halogenierte Kohlenwasserstoffreste, beispielsweise Halogenalkylreste, wie der 3-Chlorpropylrest, der 3,3,3-Trifluor-n-propylrest, der 2,2,2,2',2', 2'-Hexafluorisopropylrest, der Heptafluorisopropylrest, und Halogenarylreste, wie der o-, m- und p-Chlorphenylrest, der 3-Aminopropylrest, der 3-(2-Aminoethylamino)propylrest, der 3-Thiopropylrest oder Propylreste, die in 3-Stellung am Propylrest gebundene Polyglykole, wie Ethylenglykol oder Propylenglykol, oder gemischte Polyglykole, enthalten.

Einer der Reste R in den Endgruppen, d.h. in den Gruppen der vorstehenden allgemeinen Formel, in denen a die Bedeutung 3 hat, kann ein funktioneller Rest sein, beispielsweise eine kondensierbare Gruppe, wie die OH-, Alkoxy-, Acetoxy- und Amino-Gruppe, eine addierbare Gruppe, wie die Vinylgruppe oder das Wasserstoffatom oder ein $C_1$-$C_{18}$-Kohlenwasserstoffrest, der eine kondensierbare oder addierbare Gruppe trägt.

Das erfindungsgemäße Verfahren eignet sich auch für die Reinigung von Organopolysiloxanen mit Glykoletherresten und Block- oder Copolymeren aus Organosiloxaneinheiten und Glykolethereinheiten, wie Ethylen- und Propylenglykolethereinheiten.

Das erfindungsgemäße Verfahren eignet sich besonders zur Reinigung von linearen oder cyclischen Organopolysiloxanen, deren Reste R Methylreste, Phenylreste, Vinyl- oder H-Reste und gegebenenfalls OH-, Vinyl- oder H-Reste in den Endgruppen bedeuten, mit einer Viskosität von 0,5 bis $10^6$ mm$^2$/s bei 25°C.

Bei dem erfindungsgemäßen Verfahren werden Silber, Eisen, Chrom, Nickel, Kobalt und insbesondere Kupfer bevorzugt eingesetzt.

Bei dem erfindungsgemäßen Verfahren, das als Nachbehandlung im Anschluß an die Herstellung durchgeführt wird, können Ort, Temperatur, Zeit und weitere Reaktionsparameter frei gewählt werden, ohne an die Herstellungsbedingungen der Organopolysiloxane gebunden zu sein. Deshalb kann auch die Zugabeform des elementaren Metalls oder Siliziums beliebig sein. Aufgrund der großen Oberflächen reagieren Pulver mit einer Korngröße bis 1 mm oder Bronzen am leichtesten mit den Organopolysiloxanen. Nach der Reinigung sind die Pulver oder Bronzen leicht, z.B. mittels einer Filterpresse, entfernbar.

Das Metall oder Silizium kann auch als Granulat oder Späne zugesetzt werden. Der Vorteil dabei ist, daß das Metall oder Silizium besonders leicht abgetrennt werden kann, beispielsweise durch abdekantieren des flüssigen Organopolysiloxans. Das Granulat, Pulver, Bronze oder die Späne können für mehrere Ansätze verwendet werden.

Da nach modernen Äquilibrierungsverfahren hergestellte Organopolysiloxane gewöhnlich nur äußerst geringe Mengen an Verunreinigungen enthalten, sind bei allen vorstehend genannten Zugabearten sehr geringe Metallmengen ausreichend. Es werden vorzugsweise, bezogen auf das Organopolysiloxan, 0,001 bis 0,1 Gew.-% Metall oder Silizium zugesetzt.

Diese Metallmengen oder Siliziummengen können nahezu vollständig zurückgewonnen werden. Der Verlust an Produkt, d.h. an Organopolysiloxan, kann durch Waschen des Metalls oder Siliziums oder festen Reaktionsprodukts aus Metall oder Silizium und der Verunreinigung aus Organopolysiloxan mit leichtflüchtiger Ausgangsverbindung, wie cyclisches Polysiloxan, und anschließender Entfernung der Ausgangsverbindung im Vakuum äußerst gering gehalten werden.

Bei der Verwendung besonders gut mit den Verunreinigungen reagierender Metalle, wie Kupfer und Nickel, kann das erfindungsgemäße Verfahren auch mit Metalleinbauten mit relativ geringer Oberfläche durchgeführt werden. Dabei wird das Organopolysiloxan mit dem elementaren Metall in Berührung gebracht. Der Ausdruck Metalleinbauten umfaßt z.B. Rohre, Leitbleche, Gitter oder Siebe aus Metall oder Metall in Form eines Festbettreaktors, in dem das Metall als Blech, Schnitzel oder beliebig geformte Füllkörper vorhanden ist.

Für die Metalleinbauten eignet sich in besonderem Maße Kupfer, da sich auf der Metalloberfläche nach längerer Behandlungszeit mit verunreinigtem Organopolysiloxan ein dunkler Belag bildet, der auf dem Untergrund schlecht haftet, und sich teilweise selbst ablöst. Auf diese Weise wird die Metalloberfläche zumindest teilweise wieder freigelegt. Der auf der Metalloberfläche verbleibende Belag ist nicht sehr dicht, so daß die Verunreinigungen des Organopolysiloxans trotzdem mit dem darunterliegenden Metall reagieren und entfernt werden. Das Metall wird somit nur in dem Maße verbraucht wie es mit den zu entfernenden Verunreinigungen des Organopolysiloxans abreagiert. Der abgelöste Belag ist gut filtrierbar.

Die Verwendung von Metalleinbauten ist besonders geeignet für eine kontinuierliche Verfahrensführung, bei der Organopolysiloxane für längere Zeit über das Metall geleitet werden.

Das erfindungsgemäße Verfahren kann bei 15 bis 280°C, vorzugsweise bei 50 bis 280°C, durchgeführt werden. Bei höheren Temperaturen können die Eigenschaften der Organopolysiloxane durch deren beginnende Zersetzung wieder ungünstiger werden. Die erforderliche Temperatur hängt u.a. vom Metall oder Silizium, von dessen Oberfläche, von der Menge und Beschaffenheit der Verunreinigungen, von der Behandlungszeit und vom Organopolysiloxan ab. In den meisten Fällen liegt sie jedoch bei 80 bis 200°C.

Die Behandlungszeit beträgt 1 Minute bis mehrere Tage, liegt jedoch vorzugsweise bei 1 Minute bis 1 Stunde. Erwartungsgemäß verkürzt sie sich bei höherer Temperatur. Die vorstehenden, die Temperatur beeinflussenden Faktoren bestimmem auch die Behandlungszeit.

In einer bevorzugten Ausführungsform werden die Organopolysiloxane nach Entfernung oder Neutralisation des bei der Herstellung der Organopolysiloxane verwendeten Katalysators in noch durch die Herstellung erwärmtem Zustand mit dem elementaren Metall behandelt. Das Metall oder Silizium kann dabei mit dem Organopolysiloxan als Pulver, Bronze, Granulat oder Späne verrührt werden. Besonders bevorzugt ist jedoch, das erwärmte Organopolysiloxan langsam über Metalleinbauten, insbesondere aus Kupfer, zu leiten.

In den nachfolgenden Beispielen sind, falls jeweils nicht anders angegeben,

a) alle Mengenangaben auf das Gewicht bezogen;

b) alle Drücke 0,10 MPa (abs.);

c) alle Temperaturen 25°C.

<u>Beispiele</u>

**Beispiel 1**

In einem beheizten Glaskolben wurden 1000 g eines Polydimethylsiloxans mit Trimethylsilylendgruppen, das eine Viskosität von 102 mm$^2$/s bei 25°C aufwies, mit 0,5 g Kupferpulver versetzt und 20 Minuten bei 100°C gerührt. Nach dem Abkühlen wurden alle Feststoffe abfiltriert. Das Siliconöl war in den analysierten Eigenschaften Viskosität, Brechungsindex und Flüchtigkeit praktisch unverändert.

Das vorstehend eingesetzte, noch unbehandelte Öl war ohne Geruch. Das Öl wurde in einer zur Hälfte gefüllten, lichtdurchlässigen Glasflasche für 4 Stunden ins Sonnenlicht gestellt. Es entwickelte sich ein starker, unangenehmer Geruch.

Das unter gleichen Bedingungen belichtete, mit Kupferpulver behandelte Öl blieb geruchfrei. Auch nach einem Mehrfachen der vorstehenden Belichtungszeit war das Öl ohne Geruch.

**Beispiel 2**

Bei der Herstellung von additionsvernetzenden Zweikomponenten-Siliconmassen (RTV-2) kann Polydimethylsiloxan als Weichmacher zugesetzt werden. Ein wesentliches Merkmal für die Qualität des RTV-2-Produkts ist sein Vulkanisationsverhalten bzw. seine Reaktivität, was mittels der sog. Topfzeit bestimmt wird. Die Prüfung der Topfzeit erfolgt an 100 g der Zweikomponentenmischung, bestehend aus 80 g A-Komponente und 40 g B-Komponente, bei 90°C im Umlufttrockenschrank. Die Topfzeit ist erreicht, wenn erste Vulkanisationsanzeichen (gummiartige Anteile) auftreten.

Wurde gemäß der vorstehenden Prüfung die Topfzeit einer RTV-2-Masse, wobei die A-Komponente aus 0,42 Teilen eines Platinkomplexes mit 1 % Pt-Gehalt als Katalysator und 2,12 Teilen eines Vinylgruppen-haltigen Polydimethylsiloxans als Inhibitor (Viskosität 50 mm$^2$/s) sowie 850 Teilen unbehandelten Siliconöls, das in Beispiel 1 eingesetzt wurde, besteht, die B-Komponente aus 55 Teilen eines vinyldimethylsilylendständigen Polydimethylsiloxans mit einer Viskosität von 20 000 mm$^2$/s, 18,5 Teilen eines SiH-haltigen Polydimethylsiloxans als Vernetzer (Viskosität 200 mm$^2$/s), 1,8 g einer Pigmentpaste zur Einfärbung sowie 110 Teilen unbehandelten Siliconöls, das in Beispiel 1 eingesetzt wurde, besteht, gemessen, so erhielt man als Topfzeit bei 90°C 27 Minuten (Spezifikation: 11 bis 17 Minuten). Das unbehandelte Öl enthielt inhibierende Zusätze und konnte für RTV-2 als Weichmacher nicht verwendet werden.

Wurde bei der vorstehend beschriebenen Prüfung der Topfzeit das Siliconöl aus Beispiel 1 nach der Behandlung mit Kupferpulver eingesetzt, so betrug die Topfzeit 12 Minuten. Das gereinigte Öl war als Weichmacher für RTV-2 geeignet.

**Beispiele 3 bis 8**

Beispiel 1 wurde wiederholt, wobei das Polydimethylsiloxan mit den in Tabelle I aufgeführten Metallpulvermengen behandelt wurde. Die Belichtungszeit des behandelten Öls betrug 20 Stunden.

Tabelle I

| Beispiel | Metallpulver / Menge | Ergebnis |
|:---:|:---|:---|
| 3 | 5,0 g Eisen-Pulver, Fa. Merck, 150 µm | ohne Geruch |
| 4 | 0,1 g Kupfer-Pulver, Fa. Merck, Art. 2703 | ohne Geruch |
| 5 | 2,0 g Chrom-Pulver, Fa. Merck, Art. 12097 | leichter Geruch |
| 6 | 0,02 % Kupfer-Pulver, Fa. Merck, Art. 2703 | ohne Geruch |
| 7 | 0,05 % Nickel-Pulver, 99,7 %, 3 µm, Fa. Aldrich | ohne Geruch |
| 8 | 0,05 % Kobalt-Pulver, 99,8 %, 2 µm, Fa. Aldrich | ohne Geruch |

**Beispiele 9 bis 15**

In einem beheizten Becherglas wurden 1000 g eines Polydimethylsiloxans mit Trimethylsilylendgruppen, das eine Viskosität von 100 mm$^2$/s bei 25°C aufwies, gerührt. Bei den in Tabelle II angegebenen Temperaturen wurde ein Kupferblech mit 200 cm$^2$ Oberfläche für die in Tabelle II angegebene Zeit eingehängt.

Tabelle II

| Beispiel | Cu-Blech | Behandlungs- Temperatur (°C) | Behandlungs- Zeit (S) | Geruch nach Belichtung (30 Stunden) Tageslicht) |
|---|---|---|---|---|
| 9 | - | 160 | 180 | starker Geruch |
| 10 | ① | 160 | 180 | leichter Geruch |
| 11 | ① | 160 | 900 | ohne Geruch |
| 12 | ① | 200 | 180 | ohne Geruch |
| 13 | ① | 200 | 900 | ohne Geruch |
| 14 | ② | 200 | 180 | ohne Geruch |
| 15 | ② | 200 | 900 | ohne Geruch |

① Bei dem Kupferblech handelt es sich stets um dasselbe Blech, das ohne Reinigung in den nächsten Versuch eingesetzt wurde. In Beispiel 10 war die Oberfläche des Kupferblechs blank.

② Dieses Kupferblech hatte an der Oberfläche bereits einen dunklen, in dickeren Schichten schlecht haftenden Belag. Der Belag entstand durch die erfindungsgemäße Behandlung von 100 kg der in Beispiel 9 bis 15 verwendeten Polydimethylsiloxansorte.

**Vergleichsbeispiele 16 bis 19**

Jeweils 1000 g des in den Beispielen 9 bis 15 verwendeten Polydimethylsiloxans wurden mit 0,5 Gew.-% einer der adsorbierenden Substanzen CuO, MgO, ZnO und Aktivkohle versetzt, auf 100°C erhitzt, 30 Minuten gerührt, auf 50°C abgekühlt, filtriert und 8 Stunden am Sonnenlicht gelagert.

Gegenüber der unbehandelten Probe war das Geruchsniveau der vorstehenden Proben abgesenkt, jedoch zu stark (stärker als in Beispiel 5).

**Patentansprüche**

1. Verfahren zur Reinigung von Organopolysiloxanen, bei dem die Organopolysiloxane nach deren Herstellung mit elementarem Metall, das ausgewählt wird aus Magnesium, Titan, Zirkon, Hafnium, Vanadium, Niob, Tantal, Chrom, Molybdän, Wolfram, Mangan, Eisen, Kobalt, Nickel, Kupfer, Silber, Zink, Cadmium, Zinn, Blei, Antimon und Bismut oder Silizium behandelt werden.

2. Verfahren nach Anspruch 1, wobei als Metall Eisen, Kupfer, Nickel oder Silber eingesetzt wird.

3. Verfahren nach Anspruch 1 oder 2, wobei das Metall oder Silizium als Pulver oder Bronze zugesetzt wird.

4. Verfahren nach Anspruch 1 oder 2, wobei das Metall oder Silizium in Form von Granulat oder Spänen zugesetzt wird.

5. Verfahren nach einem der Ansprüche 1 bis 4, wobei, bezogen auf das Organopolysiloxan, 0,001 bis 0,1 Gew.-% Metall oder Silizium zugesetzt werden.

6. Verfahren nach Anspruch 1 oder 2, wobei die Organopolysiloxane mit Metalleinbauten in Berührung gebracht werden.

7. Verfahren nach einem der Ansprüche 1 bis 6, wobei als Metall Kupfer oder Nickel eingesetzt wird.

8. Verfahren nach einem der Ansprüche 1 bis 7, wobei die Behandlung bei 50 bis 280°C erfolgt.

9. Verfahren nach einem der Ansprüche 1, 6, 7 oder 8, wobei die Organopolysiloxane nach Entfernung oder Neutralisation des bei der Herstellung der Organopolysiloxane verwendeten Katalysators in noch durch die Herstellung erwärmtem Zustand über Kupfereinbauten geleitet werden.

**Claims**

1. Process for the purification of organopolysiloxanes, in which, after their preparation, the organopolysiloxanes are treated with elemental metal which is selected from magnesium, titanium, zirconium, hafnium, vanadium, niobium, tantalum, chromium, molybdenum, tungsten, manganese, iron, cobalt, nickel, copper, silver, zinc, cadmium, tin, lead, antimony and bismuth or silicon.

2. Process according to Claim 1, in which the metal employed is iron, copper, nickel or silver.

3. Process according to Claim 1 or 2, in which the metal or silicon is added as a powder or bronze.

4. Process according to Claim 1 or 2, in which the metal or silicon is added in the form of granules or filings.

5. Process according to one of Claims 1 to 4, in which 0.001 to 0.1 % by weight of metal or silicon is added, based on the organopolysiloxane.

6. Process according to Claim 1 or 2, in which the organopolysiloxanes are brought into contact with metal installations.

7. Process according to one of Claims 1 to 6, in which the metal employed is copper or nickel.

8. Process according to one of Claims 1 to 7, in which the treatment is carried out at 50 to 280°C.

9. Process according to one of Claims 1, 6, 7 or 8, in which, after the catalyst used in the preparation of the organopolysiloxanes has been removed or neutralized, the organopolysiloxanes are passed over copper installations in the heated state in which it still remains after the preparation.

**Revendications**

1. Procédé de purification d'organopolysiloxanes, lors duquel l'on traite les organopolysiloxanes après leur fabrication à l'aide d'un métal élémentaire, qui est choisi parmi le groupe se composant de magnésium, de titane, de zirconium, d'hafnium, de vanadium, de niobium, de tantale, de chrome, de molybdène, de tungstène, de manganèse, de fer, de cobalt, de nickel, de cuivre, d'argent, de zinc, de cadmium, d'étain, de plomb, d'antimoine, et de bismuth ou de silicium.

2. Procédé selon la revendication 1, caractérisé en ce que le fer, le cuivre, le nickel ou l'argent est utilisé en tant que métal.

3. Procédé selon la revendication 1 ou 2, caractérisé en ce que du silicium sous forme de poudre ou du bronze est ajouté au métal.

4. Procédé selon la revendication 1 ou 2, caractérisé en ce que du silicium sous forme de granulat ou de copeaux est ajouté au métal.

5. Procédé selon l'une quelconque des revendications 1 à 4, caractérisé en ce que, par rapport à l'organopolysiloxane, l'on ajoute de 0,001 à 0,1 % en poids de métal ou de silicium.

6. Procédé selon la revendication 1 ou 2, caractérisé en ce que les organopolysiloxanes sont mis en contact avec des éléments d'insertion métalliques.

7. Procédé selon l'une quelconque des revendications 1 à 6, caractérisé en ce que l'on utilise en tant que métal du cuivre ou du nickel.

8. Procédé selon l'une quelconque des revendications 1 à 7, caractérisé en ce que le traitement se fait à une température de 50 à 280°C.

9. Procédé selon l'une quelconque des revendications 1, 6, 7, ou 8, caractérisé en ce que les organopolysiloxanes, après élimination ou neutralisation du catalyseur utilisé lors de la fabrication des organopolysiloxanes, sont acheminés, encore à l'état chaud produit par la fabrication, sur des éléments d'insertion en cuivre.